(19) **Europäisches Patentamt** / **European Patent Office** / **Office européen des brevets**

(11) **EP 4 575 680 A1**

(12) **EUROPEAN PATENT APPLICATION**

(43) Date of publication:
**25.06.2025 Bulletin 2025/26**

(21) Application number: **23307322.0**

(22) Date of filing: **21.12.2023**

(51) International Patent Classification (IPC):
**G05B 11/42** *(2006.01)*

(52) Cooperative Patent Classification (CPC):
**G05B 11/42**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Schneider Toshiba Inverter Europe SAS**
**27120 Pacy-sur-Eure (FR)**

(72) Inventors:
• **EJJABRAOUI, Kamal**
  **27930 GRAVIGNY (FR)**
• **INEZA, Albin**
  **78440 GARGENVILLE (FR)**
• **SAVREUX, Lucas**
  **27000 EVREUX (FR)**

(74) Representative: **Plasseraud IP**
**104 Rue de Richelieu**
**CS92104**
**75080 Paris Cedex 02 (FR)**

(54) **FLUID DELIVERY SYSTEMS PID AUTOTUNING**

(57)     Method for calculating PID parameters of a fluid system comprising a motor driving a pump, a compressor or a fan, comprising further a feedback sensor providing a feedback signal on the system and a PID regulation controlling the motor speed, wherein the method comprises:
- after an initial approximation of the fluid system by a first order transfer function with delay where three parameters of the transfer function of the process to be identified are: $K$ Static gain, $\theta$ Delay, $\tau$ Time constant,
- one or more sequences of:
a - bypassing the PID regulation and implementing the following processes:
- a periodic relay process providing a first point $(\omega_{-180}; G_{-180})$ at -180° of phase named critical point,
- a periodic relay with integration process providing a second point $(\omega_{-90}; G_{-90})$ at - 90° of phase and,
- a step injection providing a third point $G_0$ at $\omega = 0°$ of phase and at null frequency,

b - resolving the relevant equations in equation systems according to the points obtained through said processes to calculate the transfer function parameters available among: $K = G_0$,

$$\tau = \frac{1}{\omega_{-180}}\sqrt{\left(\frac{K}{G_{-180}}\right)^2 - 1}, \theta = (tan^{-1}(\omega_{-180} \cdot \tau) + \pi) \cdot \frac{1}{\omega_{-180}}$$

c - applying the transfer function parameters obtained to calculate PID parameters for the system regulation:

$$\begin{cases} K_p = \frac{\tau}{K \cdot (\lambda + \theta)} \\ T_i = \tau \\ T_d = \theta \end{cases}$$

EP 4 575 680 A1

FIG. 4

## Description

## Technical Field

This disclosure pertains to the field of regulation of systems such as systems where a pump, a compressor or a fan driven by an electric motor delivers a fluid such as a gas or a liquid to a client system and comprising regulating a pressure, a flow or a temperature of the fluid and more precisely concerns the processes for tuning a PID regulation of such a process.

## Background Art

It is known to provide regulation of the speed of a pump or a compressor through a regulation of the electric motor driving such pump, compressor or fan. There are however applications where it exists a need to provide a regulation of the flow or pressure of fluid within a fluid system such as piping delivering such fluid to a client system, in particular when such client system is remote from the pump or compressor.

There also exist PID autotuning processes for characterizing the fluid systems and refining the drive commands for regulating the motor speed considering the fluid system characteristics. Known online PID autotuning methods are based on two principles, the step based autotuning method and the relay based autotuning method. Online autotuning means that PID tuning has to be done while the system is functioning. This needs the implementation of a dedicated algorithm.

Step-based autotuning is similar to an offline autotuning based on process identification but is performed online. A command step is applied, in open loop, around a stabilized operating point, and response is recorded in order to enable a process identification such as in Alberto Leva, Filippo Donida "A remote laboratory on PID autotuning;", Proceedings of the 17th World Congress The International Federation of Automatic Control Seoul, Korea, July 6-11, 2008 IFAC Proceedings Volumes, Volume 41, Issue 2, 2008, Pages 8147-8152, Available online 11 July 2008, https://doi.org/10.3182/20080706-5-KR-1001.01376.

Relay based autotuning use techniques such as the Ziegler Nichols closed loop tuning model or methods developed by Astron and Hagglund based on such model see Åström, K. J., & Hägglund, T. "PID Controllers: Theory, Design, and Tuning" ISA - The Instrumentation, Systems and Automation Society - Research Triangle Park, North Carolina 1995, ISBN:1-55617-516-7. These techniques basically enable a stable oscillation to be ascertained by stepping the process variable up and down within an established hysteresis band.

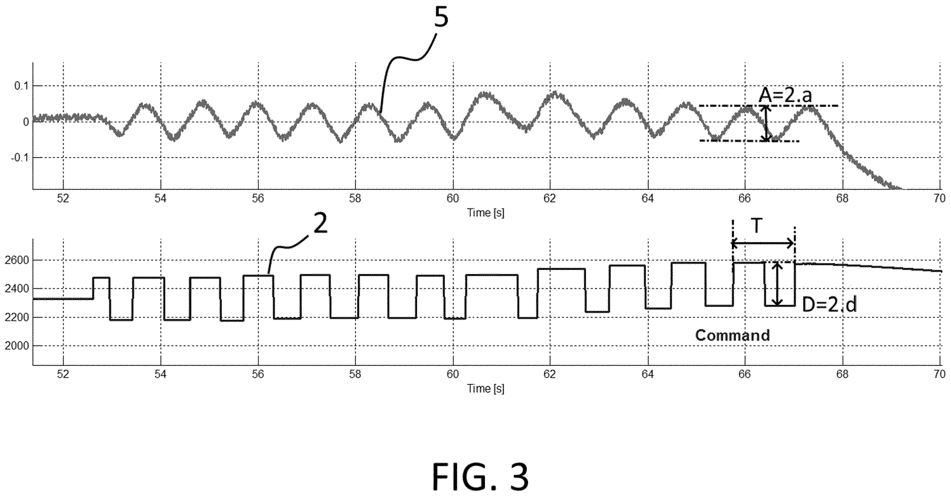

This method consists, around a stabilized operating point, to inject the command through a relay, which switches at each change of error sign as shown in figure 3. When relay is active, the PID is bypassed. Since the loop is still closed, there is no risk of instabilities. This procedure will naturally lead the relay to switch at the process critical point frequency, which is a useful point for PID tuning, as proposed by Ziegler-Nichols.

This procedure will naturally lead the relay to switch at the process critical point frequency.

The critical point can thus be defined by:

Critical period: $T_{cr} = P$

$$K_{cr} = \frac{4 \cdot d}{\pi \cdot a}$$

Critical gain:

It corresponds to the point with a phase of -180°: at this phase, gain of controlled process must be lower than 1 to avoid instability: critical gain corresponds to the maximum proportional gain that can be applied to the process to keep stable.

Based on these data, Ziegler-Nichols propose PID settings:

| Type | $K_p$ | $T_i$ | $T_d$ |
|------|-------|-------|-------|
| P | $0.5K_{cr}$ | | |
| PI | $0.4K_{cr}$ | $0.8T_{cr}$ | |
| PID | $0.6K_{cr}$ | $0.5T_{cr}$ | $0.125T_{cr}$ |

Some modifications have to be considered for an industrial use of this method:

-    a relay with hysteresis instead of a pure relay should be considered. With a pure relay, a small amount of noise can make the relay switch randomly. By introducing hysteresis, the noise must be larger than the hysteresis width to make the relay switch. In this case, the obtained point doesn't exactly correspond to critical point, but to a point with lower phase. By simplification, this difference may not be considered in the proposed algorithm: phase is supposed to be -180°.

- Manage load disturbance. Indeed, since frequent and large load changes are often encountered in industrial processes, any identification procedure should be able to, at least, detect load changes, more positively, to find a quality process model under load disturbance.

  ○ Under load disturbance, a relay feedback test results in an asymmetrical oscillation.
  ○ To restore symmetry, a relay bias has to be considered: a load disturbance can be seen as a command offset.

The procedure described in Cheng-Ching Yu, "Autotuning of PID Controllers - A Relay Feedback Approach", Springer, ISBN978-1-4471-3636-1 Published: 17 April 2013 is used to adjust the relay bias until symmetry of oscillation is restored.

Basic relay method leads to PID tuning using Ziegler-Nichols settings but a problem is that these settings are not correlated to typical process characteristic: it is thus difficult to validate these settings with confidence.

## Summary

In view of the situation, the present disclosure provides a method adapted to estimate, by an online procedure, a process transfer function, without any process a-priori knowledge to provide a complete PID tuning of a process with PID control.

The proposed method for calculating PID parameters of a system comprising a motor driving a pump, a compressor or a fan to deliver a fluid such as a gas or a liquid to a client system and comprising regulating a pressure, a flow or a temperature of the fluid, comprising further a feedback sensor providing a feedback signal on the system and a PID regulation controlling the motor speed, comprises:

an initial approximation of the fluid system by a first order transfer function with delay of the form

$$P_{estim}(S) = \frac{K.e^{-\theta.s}}{1 + \tau.s}$$

where the three parameters of the transfer function of the process to be identified for calculating the PID are:

- $K$ Static gain,
- $\theta$ Delay,
- $\tau$ Time constant,

and one or more sequences of:

a - bypassing the PID regulation and implementing the following processes:

- a periodic relay process providing a first point ($\omega_{-180}$; $G_{-180}$) at -180° of phase named critical point,
- a periodic relay with integration process providing a second point ($\omega_{-90}$;
- $G_{-90}$) at -90° of phase and,
- a step injection providing a third point $G_0$ at $\omega = 0°$ of phase and at null frequency,

b - resolving the relevant equations in the equation system:

$$G_0 = K$$

$$G_{-90} = \frac{K}{\sqrt{1 + (\tau \cdot \omega_{-90})^2}}$$

$$\cos(\omega_{-90} \cdot \theta) - \omega_{-90} \cdot \tau \cdot \sin(\omega_{-90} \cdot \theta) = 0$$

$$G_{-180} = \frac{K}{\sqrt{1 + (\tau \cdot \omega_{-180})^2}}$$

$$\sin(\omega_{-180} \cdot \theta) - \omega_{-180} \cdot \tau \cdot \cos(\omega_{-180} \cdot \theta) = 0$$

according to the points obtained through said processes to calculate the transfer function parameters available among:

$$K = G_0$$

$$\tau = \frac{1}{\omega_{-180}} \sqrt{\left(\frac{K}{G_{-180}}\right)^2 - 1}$$

$$\theta = \left(tan^{-1}(\omega_{-180} \cdot \tau) + \pi\right) \cdot \frac{1}{\omega_{-180}}$$

c -applying the transfer function parameters obtained to calculate PID parameters for the system regulation:

$$\begin{cases} K_p = \dfrac{\tau}{K \cdot (\lambda + \theta)} \\ T_i = \tau \\ T_d = \theta \end{cases}$$

This method provides a more complete detection of the PID parameters than prior art methods.

Preferably for fluid application processes where the time constant is large, $T_d$ is approximated to zero since the derivative term is not necessary.

Calculating said parameters starting from the estimated transfer function $P_{estim}(S)$, and considering the gain at pulsation $\omega$ is preferably done through the formula:

$$|P_{estim}(j \cdot \omega)| = \frac{K}{\sqrt{1 + (\tau \cdot \omega)^2}}$$

and the phase at pulsation $\omega$ done through the formula:

$$\arg\left(P_{estim}(j \cdot \omega)\right) = \varphi = tan^{-1}\left(-\frac{\sin(\omega \cdot \theta) + \omega \cdot \tau \cdot \cos(\omega \cdot \theta)}{\cos(\omega \cdot \theta) - +\omega \cdot \tau \cdot \sin(\omega \cdot \theta)}\right)$$

and according to said processes implemented:

a - through the step injection, calculating the gain $G_0$ with the step injection giving a point at null frequency & phase;
b - through the periodic relay, calculating a Pulsation: $\omega_{-180}$ and a Gain: $G_{-180} = |P_{estim}(j \cdot \omega_{-180})|$ calculating a point at phase =-180°;
c - through the periodic relay with integration, calculating a Pulsation: $\omega_{-90}$ and a Gain: $G_{-90} = |P_{estim}(j \cdot \omega_{-90})|$ calculating

a point at phase = -90°.

Said step injection command may comprise bypassing the system PID regulation, inputting a step having an amplitude Δu to the current speed command of the motor, waiting for process feedback convergence, measuring a feedback signal value Δv, calculating said static gain K as Δv/Δu and then reestablishing the system PID regulation.

The step amplitude Δu may be limited in order not to exceed an upper limit sh of the motor speed.

Said periodic relay process may comprise:

- bypassing the system PID regulation,

- providing a series of relay switching on sign changes of the feedback signal,

- waiting for convergence of the feedback signal,

- measuring a relay period $T$, a feedback amplitude A and a relay amplitude d thus providing a critical period $T_U = T$ and a critical gain 
$$K_u = \frac{4.d}{\pi.A/2} \, ,$$

- reestablishing the system PID regulation.

The relay amplitude d may be limited in order that the motor speed does not to exceed defined upper and lower limits sh, sl.

Said periodic relay with integration process comprises:

- bypassing the system PID regulation,

- applying a series of ramps or relay switching with integration around the last PID output wherein the relay switches on sign change of the feedback signal,

- analyzing convergence of the feedback signal and when convergence is achieved recording a point at 90° of phase at the relay period T and calculating:

○ Input amplitude: $D = 2 \cdot d = G \cdot \dfrac{T}{2}$

○ Process period @-90° phase: $T_{-90} = T$

○ Process gain @-90° phase: $K_{-90} = \dfrac{\pi^2}{8} \cdot \dfrac{A/2}{d} = \dfrac{\pi^2 \cdot a}{8 \cdot d}$

where A is the peak-to-peak amplitude of the feedback signal, D=2.d is the peak-to-peak amplitude of the relay signal, G is the slope of the relay triangle waves; - reestablishing the system PID regulation.

Said step injection, relay method, relay method with integration may be aborted and the PID regulation reestablished if convergence is not achieved within a stipulated time limit or if the feedback signal exceeds a stipulated amplitude limit.

Detecting convergence may comprise periodically providing measures of a feedback signal sample and comparing such to its mean value based on a dedicated number of samples, comparing the absolute difference between said measures and said mean value, confirming achievement of convergence when said absolute difference remains under a defined limit for a specified period of time.

In case one of the methods did not reach convergence, the following calculations may be done to recover missing elements:

- If $(\omega_{-90}; G_{-90})$ AND $(\omega_{-180}; G_{-180})$ are known:

  o If $G_0$ is known:

    ▪ $K = G_0$

  o Else:

    ▪ $K = G_{-90} \cdot G_{-180} \cdot \sqrt{\dfrac{\omega_{-90}^2 - \omega_{-180}^2}{(\omega_{-90} \cdot G_{-90})^2 - (\omega_{-180} \cdot G_{-180})^2}}$

    ▪ Or $K = G_{-90} \cdot \sqrt{2}$ in case $\dfrac{\omega_{-90}^2 - \omega_{-180}^2}{(\omega_{-90} \cdot G_{-90})^2 - (\omega_{-180} \cdot G_{-180})^2}$ is negative

  o $\tau = \dfrac{1}{\omega_{-90}} \sqrt{\left(\dfrac{K}{G_{-90}}\right)^2 - 1}$

  o $\theta = tan^{-1}\left(\dfrac{1}{\omega_{-90} \cdot \tau}\right) \cdot \dfrac{1}{\omega_{-90}}$

- If $(\omega_{-90}; G_{-90})$ is known:

  o If $G_0$ is known:

    ▪ $K = G_0$

  o Else:

    ▪ $K = G_{-90} \cdot \sqrt{2}$

  o $\tau = \dfrac{1}{\omega_{-90}} \sqrt{\left(\dfrac{K}{G_{-90}}\right)^2 - 1}$

  o $\theta = tan^{-1}\left(\dfrac{1}{\omega_{-90} \cdot \tau}\right) \cdot \dfrac{1}{\omega_{-90}}$

- If $(\omega_{-180}; G_{-180})$ is known:

  o If $G_0$ is known:

    ▪ $K = G_0$

  o Else:

    ▪ $K = G_{-180} \cdot \sqrt{2}$

  o $\tau = \dfrac{1}{\omega_{-180}} \sqrt{\left(\dfrac{K}{G_{-180}}\right)^2 - 1}$

  o $\theta = (tan^{-1}(\omega_{-180} \cdot \tau) + \pi) \cdot \dfrac{1}{\omega_{-180}}$

These calculations provide a fallback position in case one of the three proposed processes does not reach convergence or is missing.

The sequence may be repeated from time to time during the operational life of the system to adapt the PID parameters to the ageing of the system.

In a particular embodiment, the present method may comprise further choosing settings between settings based on the hereabove process and settings based on Ziegler Nichols method or choosing settings based on robust gains that is minimal proportional gain, maximal integral time constant and minimal derivative time constant,

$K_p = min\left(0.4 \cdot K_{cr}; \dfrac{\tau}{K \cdot (\lambda + \theta)}\right)$ ; $T_i = max(0.8 \cdot T_{cr}; \tau)$; $T_d = 0$ between the results of the present method and Ziegler Nichols settings.

This possibility to choose between different settings providing aggressive tuning, moderate tuning and conservative tuning offers the customer the possibility to adapt the PID to specific needs, for example adapt the PID regulation to promote quick filing of a reservoir in case of flooding or to the contrary adapt the PID regulation to limit pressure variations in a water distribution system.

In the method, once the PID parameters are calculated the PID regulation is re-established with the calculated parameters.

**Brief Description of Drawings**

Other features, details and advantages will be shown in the following detailed description and on the figures, on which:

Figure 1 shows a basic closed loop process with PID;

Figure 2 shows simplified schematics of PID bypass implementation;

Figure 3 is a known periodic relay command input signal and an output signal of the process;

Figure 4 shows an input signal with a series of commands of the present disclosure and corresponding output signals;

Figure 5 shows input and output curves after a step injection;

Figure 6 shows a Nyquist diagram of a process;

Figure 7 shows a relay with integration command example;

Figure 8 shows an example of possible simplified flowchart of implementation of processes of the depicted method.

In present designs of control systems of pumps for hydraulic systems, regulation comprises a transfer function-based method which is a simple PI method. With this method, a simple PI tuning rule can be obtained, based on estimation of process as a first order transfer function, with delay.

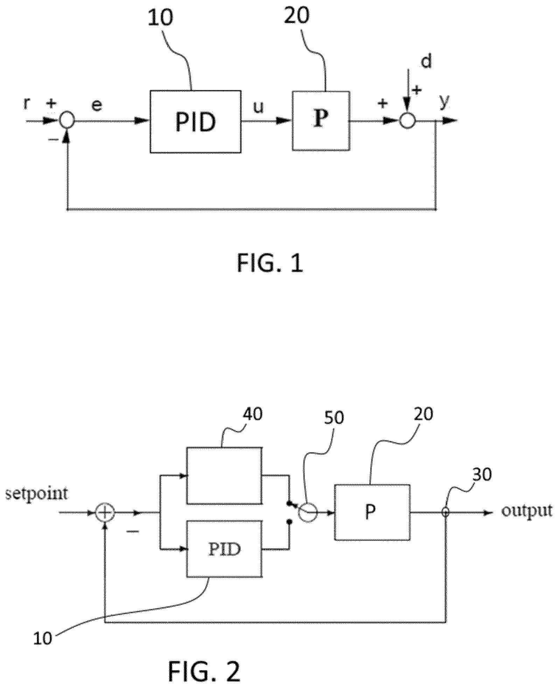

In a fluid delivery system, a PID 10 + Process 20 is approximated in accordance with figure 1. The transfer function of such a process is given hereunder where U(s), and E(s) represent respectively the Laplace transforms of the command and error between the process P feedback and target.

$$U(s) = K_p \cdot \left( 1 + \frac{1}{T_i \cdot s} + T_d \cdot \frac{s}{1 + \frac{T_d}{N} \cdot s} \right) \cdot E(s)$$

In fluid delivery application the process transfer function may be assimilated to a first order function with a delay, thus, the structure of the process transfer function $P(s)$ becomes:

$$P(s) = \frac{K \cdot e^{-s\theta}}{\tau \cdot s + 1}$$

where three parameters of the transfer function of the process must be identified: K which is the Static gain, $\tau$ which is the time constant and $\theta$ which is the delay of the process.

A principle of the tuning method of the present disclosure is shown in figure 2 where the PID regulation 10 is disconnected from the process 20 and replaced by a specific command module 40 keeping the closed loop structure between a setpoint and an output of the process;

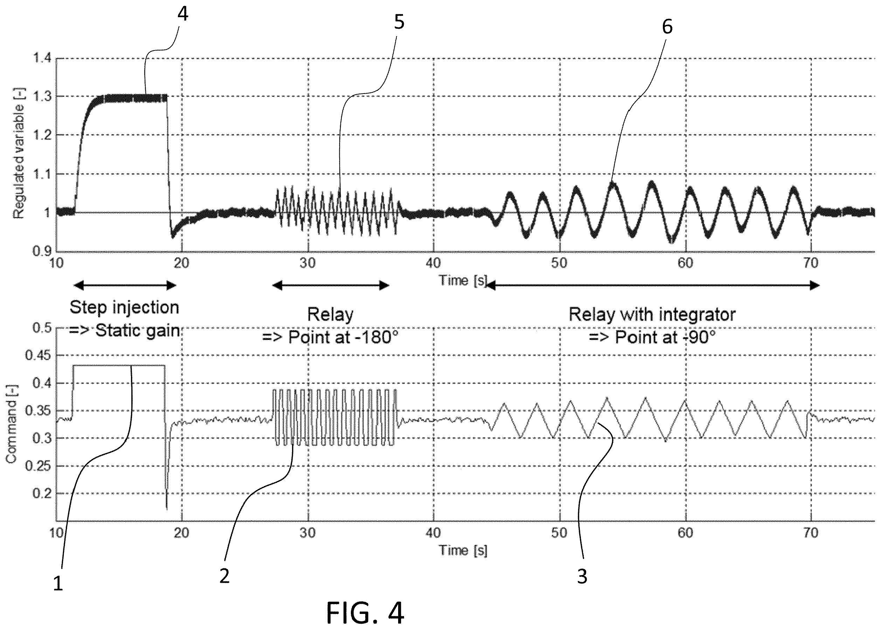

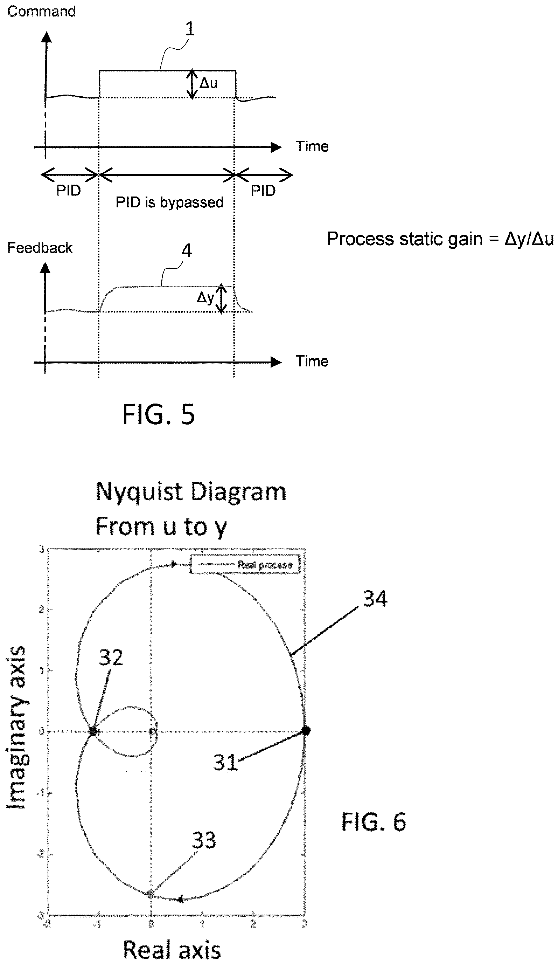

The commands of the PID tuning method used in the present disclosure are, as shown in figure 4, a combination of a step injection 1, a periodic relay command 2 also called relay method and a periodic relay with integration command 3 also called relay method with integration which will be discussed hereunder. The combination of step injection 1, periodic relay command 2 and periodic relay with integration 3 allows to identify three points of the process transfer function on the Nyquist curve 34, as illustrated in figure 6 in reference with the processes in figure 4 :

The point 32 at -180° of phase (critical point) is obtained with the relay method 2,

The point 33 at -90° of phase is obtained by adding an integrator 3 in series after the relay, providing a relay method with integration or periodic relay with integration,

The 31 point at 0° of phase corresponds to the process static gain: it is obtained by the step injection 1.

The need to identify various points in the Nyquist curve is that with the critical point only, the -90° point only or the 0° point only, and without any process knowledge, an infinity of transfer function can correspond to such points. To approximate the correct transfer function least 2 points are thus needed. But the accuracy of estimation can vary with the processes and with identified points and a more precise determination of such transfer function is necessary. With the step injection 1, periodic relay command 2 also called relay method and periodic relay with integration command 3 present disclosure provides a more accurate determination of the transfer function.

Step injection procedure:

The role of the step injection 1 is to estimates the process static gain. The procedure starts with a bypass of the PID command, and the application in input of the process a user defined pump motor speed increase step $\Delta u$ above a last PID output as in figure 5. The user defined speed increase step 1 may be reduced to prevent from command limitation overshoot or to prevent exceeding the maximum pump motor speed.

Then the process awaits convergence at the output sensor and when convergence is obtained that is when after periodically providing samples of a feedback signal 4 $\Delta Y$ at the sensor 30 of figure 2 during the step injection and comparing the absolute difference between said samples to a mean value of such signal in a dedicated number of samples, confirming achievement of convergence when said absolute difference remains under a defined limit for a specified period of time.

When convergence is obtained, the process static gain K is estimated as being $\Delta Y/\Delta U$, and the PID control is reconnected.

Basic Relay method procedure:

The basic relay method depicted in figure 3 provides a periodic relay command 2, that is step increases and decrease of the motor speed. This method starts with a bypass of the PID command, comprises the application of a first step as a relay switch and then the relay switches to increase and decrease the pump motor speed around the last PID output on sign change of the output signal 5 at sensor 30 of figure 2. In this process having the input and output curves shown in figure 3, a hysteresis is considered in order to prevent from inopportune switching due to noise and a bias is applied in order to ensure a symmetrical shape of relay (if not, it means that process is non-linear, or that a load disturbance intervenes).

The relay amplitude 2.d is defined by the user but is corrected if it leads to command limitation overshoot.

Convergence of relay's period and of feedback variation's amplitude is analyzed and if convergence is obtained the critical point can thus be recorded, from relay period T, feedback amplitude A=2.a, and relay gain d:

Critical period:

$$T_u = T$$

Critical gain:

$$K_u = \frac{4 \cdot d}{\pi \cdot A/2} = \frac{4 \cdot d}{\pi \cdot a}$$

This procedure will naturally lead the relay to switch at the process critical point frequency.

The critical point is then the point with a phase of -180°: at this phase, gain of the controlled process must be lower than 1 to avoid instability: critical gain corresponds to the maximum proportional gain that can be applied to the process to keep it stable.

If a convergence of the output is not achieved, or in case of abnormal non-relay switching, procedure is aborted.

As said, the relay method gives a point at phase = -180° and provides

Pulsation: $\omega_{-180}$;
Gain: $G_{-180} = |P_{estim}(j \cdot \omega)_{-180}|$.

At the end of the procedure, the PID is then reconnected, and a next step is activated.

Relay method with integration procedure:

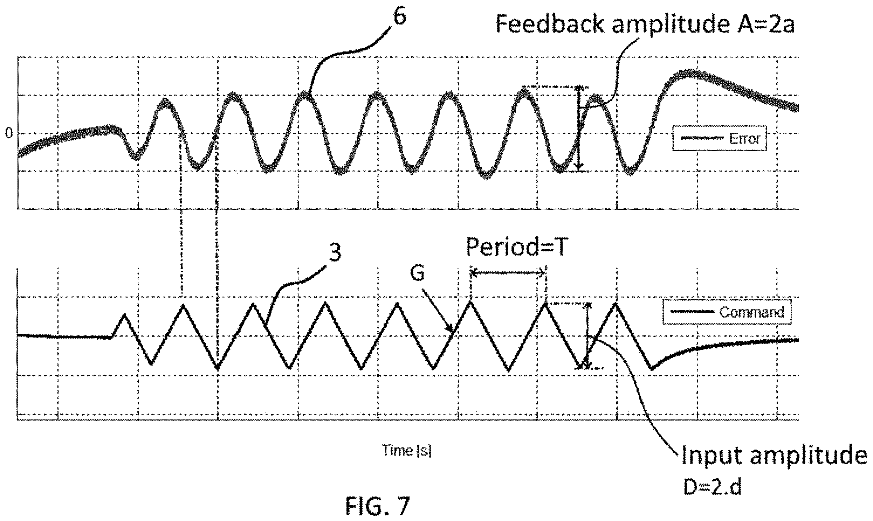

In this method, the PID is disconnected, and the motor speed is increased and decreased with ramps as shown in figure 7.

The role of this procedure is to estimate the process point at -90° of phase using the relay with integration method. This method is based on the relay method but adds add an integrator at the relay output.

This procedure also bypasses the PID command and applies a succession of ramp signals 3 starting from the last PID output. In this case also, the relay switches on sign change of the feedback signal 6. An hysteresis is considered in order to prevent from inopportune switching due to noise, the relay amplitude is defined by the user, but is corrected if it leads to command limitation overshoot.

The main difference with the relay method is the integration applied at the relay output. The integration is stopped if the command limitation of the motor is reached. As in figure 7, the slope is the gain G of the relay method.

Convergence of relay's period and of feedback variation's amplitude is analysed and if it's achieved a point at -90° of phase can thus be recorded taking into account the relay period T, relay gain G and the feedback amplitude A.:

Input amplitude:
$$D = 2 \cdot d = G \cdot \frac{T}{2}$$

Process period @-90° phase: $T_{-90} = T$

Process gain @-90° phase:
$$K_{-90} = \frac{\pi^2}{8} \cdot \frac{A/2}{d} = \frac{\pi^2 \cdot a}{8 \cdot d}$$

Here also If convergence is not achieved, the procedure is aborted.

At the end of this procedure, the PID is then reconnected, and the next step of the process is activated.

The Relay with integration method provides:

Pulsation : $\omega_{-90}$

Gain: $G_{-90} = |P_{estim}(j \cdot \omega_{-90})|$

Back to figure 1, the global closed loop transfer function is defined by:

$$\frac{y}{r} = \frac{C \cdot P}{1 + C \cdot P}$$

And the desired closed loop global function specification is then:

$$\frac{y}{r} = \frac{e^{-s\theta}}{\lambda \cdot s + 1}$$

$$C \approx \frac{1}{P} \cdot \left( \frac{e^{-s\theta}}{(\lambda + \theta) \cdot s + 1} \right)$$

With $\lambda$ being the global time constant of the system in closed loop.

Which means:

$$C = \frac{\tau}{K \cdot (\lambda + \theta)} \cdot \left( 1 + \frac{1}{\tau \cdot s} \right)$$

Then based on the process transfer function parameters ($K, \tau, \theta$) that are its poles, zeros and transport delays that have been identified with the three steps procedure above, we can identify the parameter of the PID controller as:

$$\begin{cases} K_p = \dfrac{\tau}{K \cdot (\lambda + \theta)} \\ T_i = \tau \\ T_d = 0 \end{cases}$$

In fluid applications, such as processes dealing with gas or liquid the derivative term is set to 0 since the concerned processes are slow and do not need a derivative correction term. Tuning parameter for the global time constant $\lambda$, depending on the requirement of the customer is:

$$\lambda = \alpha \cdot \max (\tau, \theta)$$

Where $\alpha$ can be configured between [0.1 to 2] depending on the customer requirement, for example according to the known designations:

| | |
|---|---|
| $\alpha = 0.5$ | Aggressive tuning |
| $\alpha = 1$ | Moderate tuning |
| $\alpha = 2$ | Conservative tuning |

As discussed above, based on the periodic relay command, Ziegler-Nichols proposes the PID settings:

| Type | $K_p$ | $T_i$ | $T_d$ |
|---|---|---|---|
| P | $0.5K_{cr}$ | | |
| PI | $0.4K_{cr}$ | $0.8T_{cr}$ | |
| PID | $0.6K_{cr}$ | $0.5T_{cr}$ | $0.125T_{cr}$ |

It is also possible to select settings corresponding to most robust settings between settings based on the proposed process estimation with step injection, periodic relay command and periodic relay command with integration and settings based only on Ziegler Nichols: minimal proportional gain, maximal integral time constant and minimal derivative time constant. This allows to always have a process response as a first order transfer function without any overshoot to avoid oscillation in the system.

The customer then has the choice between different settings depending on the process response that he wants to have in his system depending on the application:

A - Settings based on Ziegler Nichols method:

$$K_p = 0.4 \cdot K_{cr} \ ; \qquad T_i = 0.8 \cdot T_{cr} \ ; \quad T_d = 0$$

where $K_{cr}$ and $T_{cr}$ are the critical gain and period identified within the relay base method.

This method provides a quick process response with some oscillations such as overshoot and damping.

B - Settings based the disclosed method providing a Transfer function identification with relay method, relay + integrator and step injection:

$$K_p = \frac{\tau}{K \cdot (\lambda + \theta)} ; \qquad T_i = \tau ; \ T_d = 0$$

Where $(K, \tau, \theta)$ are the identified transfer function parameters from the present procedure. This allows different process responses: aggressive, moderate, and conservative without oscillations except small overshoot with conservative tunning. The process will behave as a first order transfer function with delay and the response time will depend on the tunning choice.

C - Settings based on the most robust gains (minimal proportional gain, maximal integral time constant and minimal derivative time constant)

$$K_p = min\left(0.4 \cdot K_{cr}; \frac{\tau}{K \cdot (\lambda + \theta)}\right); \qquad T_i = max(0.8 \cdot T_{cr}; \tau); \quad T_d = 0$$

between the present method based on the three processes periodic relay, periodic relay with integration and step injection and the Ziegler Nichols method. These last settings provide a robust process response without any oscillation and overshoot.

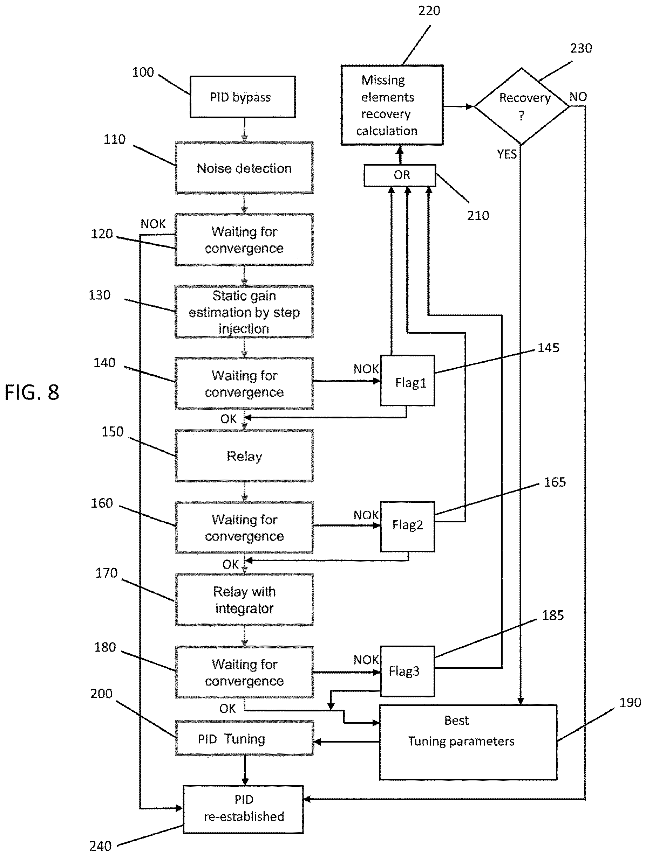

A possible software implementation of the method may be in accordance with the flowchart of figure 8. Such software could be integrated in the process control device or motor control device already incorporating the PID control software.

The method starts with bypassing the PID at 100, then a noise detection process 110 be done with a first convergence detection process 120 which may cause ending of the process and direct reestablishment of the PID 240 if convergence cannot be obtained. After noise detection, the three method disclosed hereabove may be initiated. In the presented chart, the method follows with the static gain estimation with the step injection process 130, waits for convergence 140 and exits if convergence cannot be obtained a flag 145 is raised.

The second process, Relay 150 to obtain the critical point follows the step injection and comprises also a detection of convergence 160 which stops the Relay and raises a flag 165 if convergence cannot be obtained.

The third process is the Relay with integrator 170 to obtain the point at 90° of phase on the Nyquist curve which also has its convergence detection step 180 which raise a third flag 185 if not obtained.

It should be noted that the tree processes may be implemented in a different order e.g. with the step integration in the last position and the relay with integrator in the first position.

When the processes are completed, a calculation of best tuning parameters 190 is done to provide PID tuning 200 and re-establish 240 the PID with updated parameters.

In case one of the processes did not converge at gate 210 a missing element recovery calculation is done at 220 and if recovery is possible at 230, the recovered data is transferred to the best tuning parameters step 190 otherwise the PID is re-established unchanged.,

**Industrial Applicability**

The technical solutions presented here can be used to tune hydraulic processes such as water or gas distribution with regulated pressure or regulated flow.

This disclosure is not limited to the above description and in particular as already said, the three processes step injection, periodic relay command and periodic relay command with integration may be realized in any order.

**Claims**

1.   - Method for calculating PID parameters of a fluid system comprising a motor driving a pump, a compressor or a fan, comprising further a feedback sensor providing a feedback signal on the system and a PID regulation controlling the motor speed, wherein the method comprises:

- after an initial approximation of the fluid system by a first order transfer function with delay of the form

$$P_{estim(S)} = \frac{K.e^{-\theta.s}}{1 + \tau.s}$$ where three parameters of the transfer function of the process to be identified are:

- $K$ Static gain,
- $\theta$ Delay,
- $\tau$ Time constant,

- one or more sequences of:

a - bypassing the PID regulation and implementing the following processes:

- a periodic relay process providing a first point ($\omega_{-180}$; $G_{-180}$) at -180° of phase named critical point,
- a periodic relay with integration process providing a second point ($\omega_{-90}$; $G_{-90}$) at -90° of phase and,
- a step injection providing a third point $G_0$ at $\omega = 0°$ of phase and at null frequency,

b - resolving the relevant equations in the equation system:

$$G_0 = K$$

$$G_{-90} = \frac{K}{\sqrt{1 + (\tau \cdot \omega_{-90})^2}}$$

$$\cos(\omega_{-90} \cdot \theta) - \omega_{-90} \cdot \tau \cdot \sin(\omega_{-90} \cdot \theta) = 0$$

$$G_{-180} = \frac{K}{\sqrt{1 + (\tau \cdot \omega_{-180})^2}}$$

$$\sin(\omega_{-180} \cdot \theta) - \omega_{-180} \cdot \tau \cdot \cos(\omega_{-180} \cdot \theta) = 0$$

according to the points obtained through said processes to calculate the transfer function parameters available among:

$$K = G_0$$

$$\tau = \frac{1}{\omega_{-180}} \sqrt{\left(\frac{K}{G_{-180}}\right)^2 - 1}$$

$$\theta = (tan^{-1}(\omega_{-180} \cdot \tau) + \pi) \cdot \frac{1}{\omega_{-180}}$$

c -applying the transfer function parameters obtained to calculate PID parameters for the system regulation:

$$\begin{cases} K_p = \dfrac{\tau}{K \cdot (\lambda + \theta)} \\ T_i = \tau \\ T_d = \theta \end{cases}$$

2. - Method for calculating PID parameters wherein $T_d$ is approximated to zero since the derivative term is not necessary in fluid applications processes

3. - Method according to claim 1 or 2 wherein calculating said parameters starting from the estimated transfer function $P_{estim(s)}$, and considering the gain at pulsation $\omega$ is done through the formula:

$$|P_{estim}(j \cdot \omega)| = \frac{K}{\sqrt{1 + (\tau \cdot \omega)^2}}$$

and the phase at pulsation $\omega$ done through the formula:

$$\arg\big(P_{estim}(j \cdot \omega)\big) = \varphi = tan^{-1}(-\frac{\sin(\omega \cdot \theta) + \omega \cdot \tau \cdot \cos(\omega \cdot \theta)}{\cos(\omega \cdot \theta) - +\omega \cdot \tau \cdot \sin(\omega \cdot \theta)})$$

and according to said processes implemented:

    a - through the step injection, calculating the gain $G_0$ with the step injection giving a point at null frequency & phase;
    b - through the periodic relay, calculating a Pulsation: $\omega_{-180}$ and a Gain: $G_{-180} = |P_{estim}(j \cdot \omega_{-180})|$ calculating a point at phase =-180°;
    c - through the periodic relay with integration, calculating a Pulsation: $\omega_{-90}$ and a Gain: $G_{-90} = |P_{estim}(j \cdot \omega_{-90})|$ calculating a point at phase = -90°;

4.   - Method according to any one of the preceding claims wherein said step injection command comprises bypassing the system PID regulation, inputting a step having an amplitude $\Delta u$ to the current speed command of the motor, waiting for process feedback convergence, measuring a feedback signal value $\Delta v$, calculating said static gain $K$ as $\Delta v/\Delta u$ and then reestablishing the system PID regulation.

5.   - Method according to claim 4 wherein the step amplitude $\Delta u$ is limited in order not to exceed an upper limit $s_h$ of the motor speed.

6.   - Method according to any one of the preceding claims wherein said periodic relay process comprises:

    - bypassing the system PID regulation,
    - providing a series of relay switching on sign changes of the feedback signal,
    - waiting for convergence of the feedback signal,
    - measuring a relay period $T$, a feedback amplitude A and a relay amplitude d thus providing a critical period $T_u = T$

and a critical gain $K_u = \dfrac{4.d}{\pi.A/2}$ ,
    - reestablishing the system PID regulation.

7.   - Method according to claim 6 wherein the relay amplitude d is limited in order that the motor speed does not to exceed defined upper and lower limits $s_h$, $s_l$.

8.   - Method according to any one of the preceding claims wherein said periodic relay with integration process comprises:

    - bypassing the system PID regulation,
    - applying a series of ramps or relay switching with integration around the last PID output wherein the relay switches on sign change of the feedback signal,
    - analyzing convergence of the feedback signal and when convergence is achieved recording a point at 90° of phase at the relay period T and calculating:

    $\circ$ Input amplitude: $D = 2 \cdot d = G \cdot \dfrac{T}{2}$
    $\circ$ Process period @-90° phase: $T_{-90} = T$
    $\circ$ Process gain @-90° phase: $K_{-90} = \dfrac{\pi^2}{8} \cdot \dfrac{A/2}{d} = \dfrac{\pi^2 \cdot a}{8 \cdot d}$

where A is the peak-to-peak amplitude of the feedback signal, D=2 d is the peak-to-peak amplitude of the relay signal, G is the slope of the relay triangle waves; - reestablishing the system PID regulation.

**9.** - Method according to any one of claims 4 to 8 wherein detecting convergence comprises periodically providing measures of a feedback signal sample and comparing such to its mean value based on a dedicated number of samples, comparing the absolute difference between said measures and said mean value, confirming achievement of convergence when said absolute difference remains under a defined limit for a specified period of time.

**10.** - Method according to claim 9 wherein any one of said step injection, relay method, relay method with integration is aborted and the PID regulation is reestablished if convergence is not achieved within a stipulated time limit or if the feedback signal exceeds a stipulated amplitude limit.

**11.** - Method according to claim 10 wherein in case convergence of one of said relay process, relay process with integration or step injection process is not achieved, recovery of missing elements is done with the following calculations:

- If $(\omega_{-90}; G_{-90})$ AND $(\omega_{-180}; G_{-180})$ are known:

  o If $G_0$ is known:

  ■ $K = G_0$

  o Else:

  ■ $K = G_{-90} \cdot G_{-180} \cdot \sqrt{\dfrac{\omega_{-90}^2 - \omega_{-180}^2}{(\omega_{-90} \cdot G_{-90})^2 - (\omega_{-180} \cdot G_{-180})^2}}$

- Or $K = G_{-90} \cdot \sqrt{2}$ in case $\dfrac{\omega_{-90}{}^2 - \omega_{-180}{}^2}{(\omega_{-90} \cdot G_{-90})^2 - (\omega_{-180} \cdot G_{-180})^2}$ is negative

○ $\tau = \dfrac{1}{\omega_{-90}} \sqrt{\left(\dfrac{K}{G_{-90}}\right)^2 - 1}$

○ $\theta = tan^{-1}\left(\dfrac{1}{\omega_{-90} \cdot \tau}\right) \cdot \dfrac{1}{\omega_{-90}}$

- If $(\omega_{-90}; G_{-90})$ is known:

○ If $G_0$ is known:

■ $K = G_0$

○ Else:

■ $K = G_{-90} \cdot \sqrt{2}$

○ $\tau = \dfrac{1}{\omega_{-90}} \sqrt{\left(\dfrac{K}{G_{-90}}\right)^2 - 1}$

○ $\theta = tan^{-1}\left(\dfrac{1}{\omega_{-90} \cdot \tau}\right) \cdot \dfrac{1}{\omega_{-90}}$

- If $(\omega_{-180}; G_{-180})$ is known:

○ If $G_0$ is known:

■ $K = G_0$

○ Else:

■ $K = G_{-180} \cdot \sqrt{2}$

○ $\tau = \dfrac{1}{\omega_{-180}} \sqrt{\left(\dfrac{K}{G_{-180}}\right)^2 - 1}$

○ $\theta = (tan^{-1}(\omega_{-180} \cdot \tau) + \pi) \cdot \dfrac{1}{\omega_{-180}}$

12. - Method according to any one of the preceding claims wherein said sequence is repeated from time to time during the operational life of the system to calculate PID parameters adapted to the ageing of the system.

13. - Method for calculating PID parameters of a fluid system comprising a motor driving a pump, a compressor or a fan, comprising further a feedback sensor on the system to provide a PID regulation controlling the motor speed comprising choosing settings between settings based on the method of any one of the preceding claims and settings based on Ziegler Nichols method or choosing settings based on robust gains: that is minimal proportional gain, maximal integral time constant and minimal derivative time constant

$$K_p = min\left(0.4 \cdot K_{cr}; \dfrac{\tau}{K \cdot (\lambda + \theta)}\right); \qquad T_i = max(0.8 \cdot T_{cr}; \tau); \qquad T_d = 0$$

between the process of any one of the preceding claims and the Ziegler Nichols method.

14. - Process for tuning a PID regulated process comprising calculating PID parameters with the method as claimed in any one of the preceding claims and reestablishing the PID regulation with the calculated parameters.

FIG. 1

FIG. 2

FIG. 3

FIG. 4

FIG. 5

Process static gain = $\Delta y / \Delta u$

Nyquist Diagram
From u to y

FIG. 6

FIG. 7

EP 4 575 680 A1

FIG. 8

22

Europäisches
Patentamt

European
Patent Office

Office européen
des brevets

# EUROPEAN SEARCH REPORT

**Application Number**

EP 23 30 7322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/246482 A1 (TIAN GANG [US] ET AL) 30 August 2018 (2018-08-30) * abstract * * figures 1, 2, 17, 18 * * paragraphs [0038] - [0127] * | 1-14 | INV. G05B11/42 |
| A | Stephen Hornsey: "A Review of Relay Auto-tuning Methods for the Tuning of PID-type Controllers", , 1 January 2012 (2012-01-01), XP093168682, Retrieved from the Internet: URL:https://warwick.ac.uk/fac/cross_fac/iatl/student-research/reinvention/archive/volume5issue2/hornsey/ [retrieved on 2024-05-28] * the whole document * | 1-14 | |
| A | C.C. Hang: "Relay feedback auto-tuning of process controllers - a tutorial review", Journal of Process Control, 1 January 2002 (2002-01-01), pages 143-162, XP093165769, DOI: 10.1016/S0959-1524(01)00025-7 Retrieved from the Internet: URL:https://pdf.sciencedirectassets.com/271443/1-s2.0-S0959152400X00571/1-s2.0-S0959152401000257/main.pdf?X-Amz-Security-Token=IQoJb3JpZ2luX2VjEPn//////////wEaCXVzLWVhc3QtMSJHMEUCIEQyLGPUbL2hqIJZ9lx/eyE3r4WqxXFsE7Z/ekCC/VtPAiEAnRNkXck84UNG0EpHcaWrkdnoB1ZwDGE6B9V71uWASjgqswUIchAFGgwwNTkwMDM1NDY4NjUiDKMOO [retrieved on 2024-05-28] * abstract * * figure 1 * * sections 2-6 * | 1-14 | **TECHNICAL FIELDS SEARCHED (IPC)** G05B |

-/--

The present search report has been drawn up for all claims

| Place of search | Date of completion of the search | Examiner |
|---|---|---|
| The Hague | 31 May 2024 | Hageman, Elodie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P04C01)

page 1 of 2

Europäisches
Patentamt

European
Patent Office

Office européen
des brevets

## EUROPEAN SEARCH REPORT

**Application Number**

EP 23 30 7322

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JEONGUK BYEON: "Third quadrant Nyquist point for the relay feedback autotuning of PI controllers", KOREAN JOURNAL OF CHEMICAL ENGINEERING, [Online] vol. 28, no. 2, 1 February 2011 (2011-02-01), pages 342-347, XP093167888, New York ISSN: 0256-1115, DOI: 10.1007/s11814-010-0391-4 Retrieved from the Internet: URL:https://link.springer.com/content/pdf/10.1007/s11814-010-0391-4.pdf> [retrieved on 2024-05-28] * abstract * * figures 1, 4 * * section 3 * ----- | 1-14 | |
| | | | **TECHNICAL FIELDS SEARCHED (IPC)** |

The present search report has been drawn up for all claims

| Place of search | Date of completion of the search | Examiner |
|---|---|---|
| The Hague | 31 May 2024 | Hageman, Elodie |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

EP 4 575 680 A1

## ANNEX TO THE EUROPEAN SEARCH REPORT
## ON EUROPEAN PATENT APPLICATION NO.

EP 23 30 7322

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | Publication date | Patent family member(s) | Publication date |
|---|---|---|---|
| US 2018246482 A1 | 30-08-2018 | CN 110383187 A | 25-10-2019 |
| | | DE 112018001009 T5 | 12-03-2020 |
| | | US 2018246482 A1 | 30-08-2018 |
| | | WO 2018156683 A1 | 30-08-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ALBERTO LEVA ; FILIPPO DONIDA**. A remote laboratory on PID autotuning;. *Proceedings of the 17th World Congress The International Federation of Automatic Control Seoul, Korea, July 6-11, 2008 IFAC Proceedings*, 11 July 2008, vol. 41 (2), 8147-8152, https://doi.org/10.3182/20080706-5-KR-1001.01376

- **ÅSTRÖM, K. J. ; HÄGGLUND, T.** PID Controllers: Theory, Design, and Tuning. *ISA - The Instrumentation, Systems and Automation Society - Research Triangle Park, North Carolina*, 1995, ISBN 1-55617-516-7
- **CHENG-CHING YU**. Autotuning of PID Controllers - A Relay Feedback Approach. Springer, 17 April 2013